# EUROPEAN PATENT APPLICATION

(11) **EP 4 361 453 A1**
(43) Date of publication of application: **01.05.2024**
(21) Application number: 21946841.0
(22) Date of filing: 08.12.2021
(51) Int. Cl.: F16B 2/24, F16M 13/02, F16M 11/04

(54) **DEVICE ADAPTATION CONNECTION ASSEMBLY AND MINIATURE POWER SUPPLY MODULE**

(30) Priority: 25.06.2021 CN 202121434259 U
(71) Applicant: Sungrow (Shanghai) Co., Ltd., Shanghai 201203 (CN)
(72) Inventor: WEI, Shiyuan, Shanghai 201203 (CN); YU, Haiyang, Shanghai 201203 (CN); WANG, Xinyu, Shanghai 201203 (CN)
(74) Representative: Epping - Hermann - Fischer
(86) International application number: PCT/CN2021/136388
(87) International publication number: WO 2022/267365

(57) **Abstract**

A device adaptation connection assembly and a miniature power supply module. The device adaptation connection assembly comprises a hanging plate (2) and clips (1). The hanging plate (2) is integrally formed with a case (3). The hanging plate (2) is provided with a part hanging hole (2-1). The clips (1) can be detachably connected to the hanging plate (2). The part hanging hole (2-1) is exposed outside the clips (1).

## Description

This application claims the priority of the Chinese Patent Application No. 202121434259.9, titled "DEVICE ADAPTATION CONNECTION ASSEMBLY AND MINIATURE POWER SUPPLY MODULE", filed on July 25, 2021 with the China National Intellectual Property Administration, which is incorporated herein by reference in its entireties.

### FIELD

The present application relates to the technical field of intermediate connection structures, and in particular to a device adaptation connection assembly. Another object of the present application is to provide a minitype power supply module including the above device adaptation connection assembly.

### BACKGROUND

In an application scenario of device mounting, in order to improve the stability of the device mounting, it is necessary to fix the device through an adaptation connection assembly.

For example, for a minitype power module, based on different mounting condition, in a case that a fastener is needed for connecting, a hanging plate is first mounted on a case during mounting, and the hanging plate is provided with a component-hanging member to be connected to an external device. However, in some mounting conditions, it is necessary to mount a device connected with a buckle. At this time, the buckle is mounted on the hanging plate, and the buckle blocks a component-hanging hole of the hanging plate.

However, since the buckle blocks the component-hanging hole on the hanging plate when it is mounted on the hanging plate, it is necessary to remove or mount the buckle based on requirements of mounting positions in later stage, and it may exist a situation that the buckle is lost in the later stage after being removed, which makes it impossible to mount the buckle in the later stage. Also, due to a fact that the hanging plate is mounted on the case separately, the operation is cumbersome and the use convenience of the device adaptation connection assembly is poor.

Therefore, a technical problem urgently to be solved by those skilled in the art is how to improve the versatility of the device adaptation connection assembly.

### SUMMARY

An object of the present application is to provide a device adaptation connection assembly, which is convenient to use. Another object of the present application is to provide a minitype power supply module including the above device adaptation connection assembly.

To achieve the above objects, a device adaptation connection assembly is provided according to the present application, which includes:
a hanging plate integrally formed with a case, where the hanging plate is provided with a component-hanging hole; and
a buckle detachably connected to the hanging plate, where the component-hanging hole is arranged to be exposed relative to the buckle.

In an embodiment, the buckle includes a body, one of a sliding rail and a sliding groove matched to each other is arranged at a side portion of the body, and the other of the sliding rail and the sliding groove is provided on the hanging plate; one of the body and the hanging plate is provided with a clamping opening, and the other of the body and the hanging plate is provided with an elastic limiting member which is clamped into the clamping opening to fasten the buckle with the hanging plate.

In an embodiment, the body includes a connecting portion and an elastic locking portion, a bottom portion of the elastic locking portion is connected to a bottom portion of the connecting portion and a top portion of the elastic locking portion is separated from the connecting portion so as to form a U-shaped clamping portion, and both the sliding rail and the elastic limiting member are provided on the connecting portion.

In an embodiment, the elastic limiting member is formed by cutting and bending the connecting portion, and a free end of the elastic limiting member is arranged toward the direction of the opening of the U-shaped clamping portion.

In an embodiment, the connecting portion is in a flat plate structure, and the elastic locking portion is provided with an anti-falling barb whose free end extends into the U-shaped clamping portion, where the anti-falling barb is configured to clamp an external device.

In an embodiment, a free end of the elastic locking portion is provided with a flange, which is arranged toward an outside of the U-shaped clamping portion.

In an embodiment, an end portion of the sliding rail abuts against an end portion of the sliding groove when the elastic limiting member is clamped into the clamping opening.

In an embodiment, the number of the sliding rail is two, the two sliding rails are arranged on the body, and a U-shaped groove structure is formed by the sliding rails and the body.

In an embodiment, the free end of the sliding rail and the elastic limiting member are located outside from a same side of the body.

In an embodiment, a component-clamping surface on the body configured for locking the device protrudes outward from a surface of the hanging plate.

A minitype power supply module includes any one of the above device adaptation connection assembly.

In the above technical solutions, the device adaptation connection assembly provided according to the present application includes a hanging plate and a buckle, where the hanging plate is integrally formed with a case, the hanging plate is provided with a component-hanging hole, the buckle can be detachably connected to the hanging plate, and the component-hanging hole is arranged to be exposed relative to the buckle.

From the above description, it can be seen that, in the device adaptation connection assembly provided according to the present application, since the hanging plate is integrally formed with the case, it does not need to separately process and mount the hanging plate. Moreover, since the component-hanging hole is arranged to be exposed to the buckle, when the buckle is mounted on the hanging plate, it is not necessary to remove the buckle in a case that the component-hanging hole is needed for mounting in following steps. Therefore, the operation is simple, and the use convenience of the device adaptation connection assembly is effectively improved.

### BRIEF DESCRIPTION OF THE DRAWINGS

For more clearly illustrating embodiments of the present application or technical solutions in the conventional technology, the drawings referred to for describing the embodiments or the conventional technology will be briefly described hereinafter. Apparently, the drawings in the following description are only some examples of the present application, and for those skilled in the art, other drawings may be obtained based on the provided drawings without any creative efforts.
FIG. 1 is an exploded view showing a mounting plate being assembled with a hanging plate according to an embodiment of the present application;
FIG 2 is a schematic structural view showing a mounting plate being assembled with a hanging plate according to an embodiment of the present application;
FIG. 3 is a schematic view showing a process of a mounting plate being assembled with a buckle according to an embodiment of the present application;
FIG. 4 is a schematic structural view showing a mounting plate being assembled with a buckle according to an embodiment of the present application;
FIG. 5 is a schematic structural view showing a mounting position of a hanging plate according to an embodiment of the present application;
FIG. 6 is a three-dimensional structural view of mounting a hanging plate according to an embodiment of the present application;
FIG. 7 is schematic view showing a process of mounting a hanging plate with a buckle according to an embodiment of the present application;
FIG. 8 is a schematic structural view of a hanging plate being assembled with a buckle according to an embodiment of the present application;
FIG. 9 is a three-dimensional structural view of a hanging plate being assembled with a buckle according to an embodiment of the present application;
FIG. 10 is a cross-sectional view of a hanging plate being assembled with a buckle according to an embodiment of the present application;
FIG. 11 is a three-dimensional structural view of a buckle according to an embodiment of the present application;
FIG. 12 is a three-dimensional structural view of a buckle according to an embodiment of the present application from another perspective;
FIG. 13 is a three-dimensional structural view of a buckle according to an embodiment of the present application from yet another perspective;

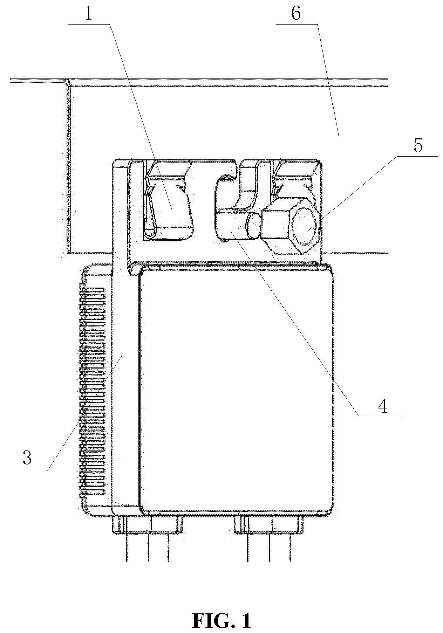

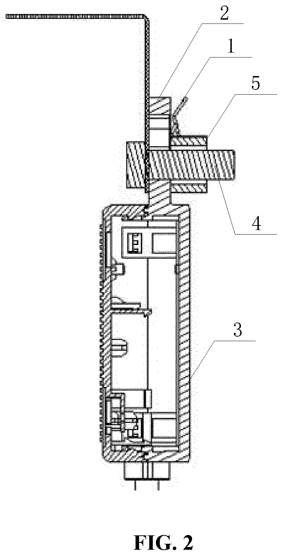

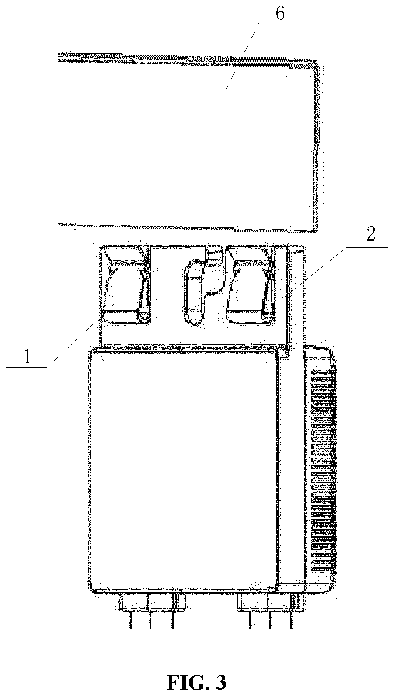

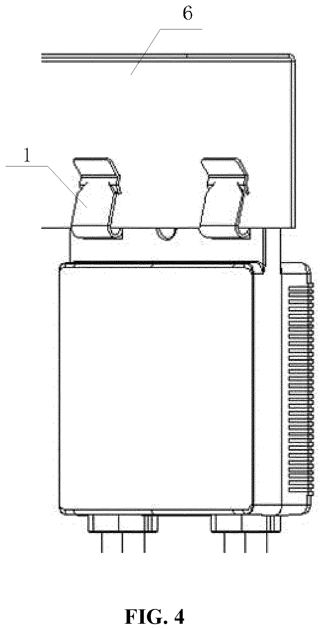

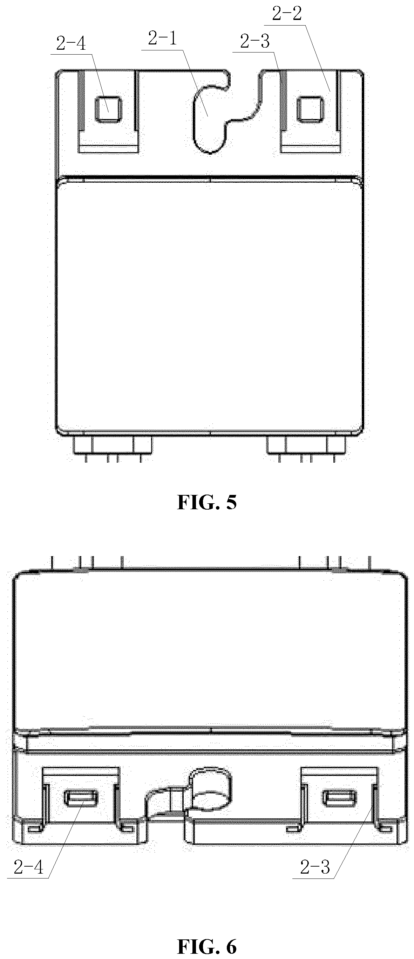

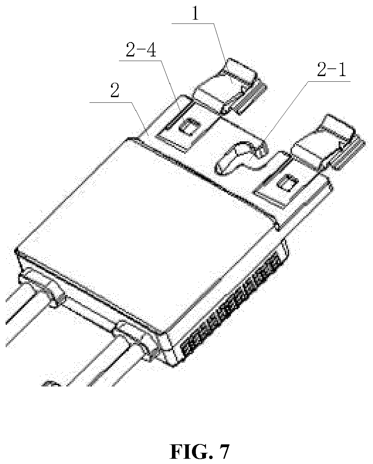

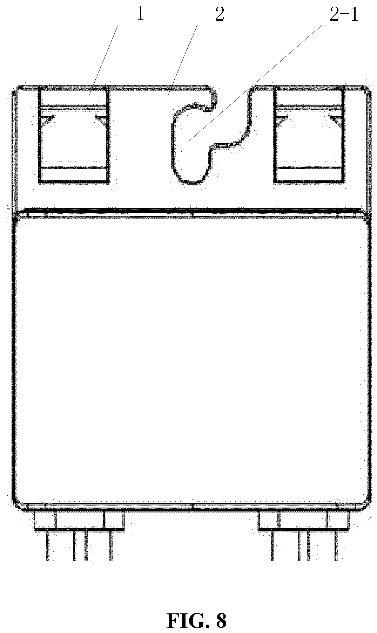

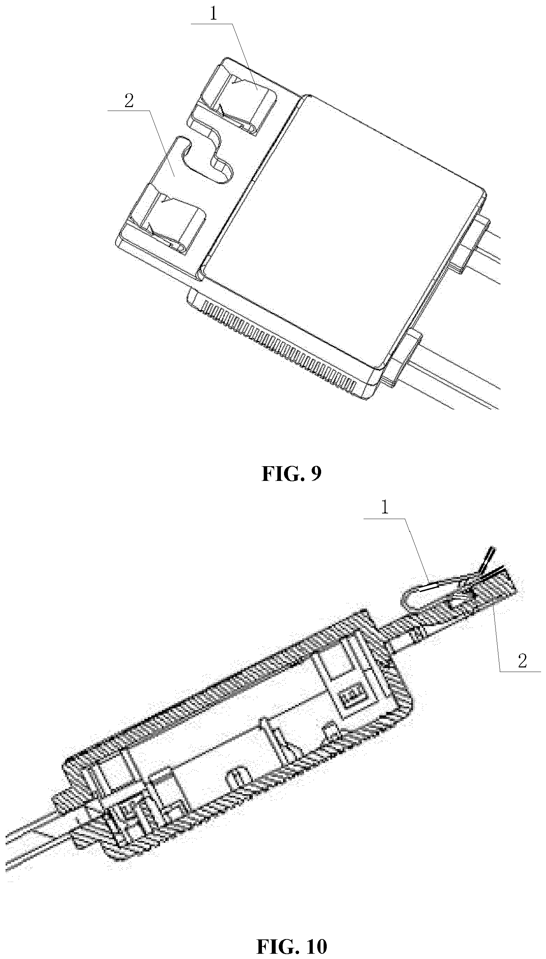

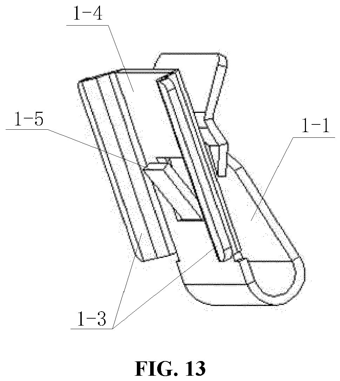

Reference numerals in FIG. 1 to FIG. 13 are listed as follows.
1 buckle; 1-1 elastic locking portion; 1-2 flange; 1-3 sliding rail; 1-4 connecting portion; 1-5 elastic limiting member; 1-6 anti-dropping barb;
2 hanging plate; 2-1 component-hanging hole; 2-2 sliding groove; 2-3 mounting groove; 2-4 clamping opening;
3 case; 4 bolt; 5 nut; 6 mounting plate.

### DETAILED DESCRIPTION OF THE EMBODIMENTS

An object of the present application is to provide a device adaptation connection assembly, which is convenient to use. Another object of the present application is to provide a minitype power supply module including the above device adaptation connection assembly.

In order to enable those skilled in the art to better understand technical solutions of the present application, the present application is further described in detail in conjunction with drawings and embodiments.

Reference is made to FIG. 1 to FIG. 13.

In a specific embodiment, the device adaptation connection assembly provided according to a specific embodiment of the present application includes: a hanging plate 2 and a buckle 1, where the hanging plate 2 is integrally formed with a case 3, and the hanging plate 2 is provided with a component-hanging hole 2-1. The buckle 1 can be detachably connected to the hanging plate 2, and the component-hanging hole 2-1 is arranged to be exposed relative to the buckle 1, that is, the buckle 1 will not block the component-hanging hole 2-1 when the buckle 1 is mounted on the hanging plate 2, so that the component-hanging hole 2-1 can be used in later stage. Preferably, the buckle 1 is formed by stamping and bending metal.

From the above description, it can be seen that in the device adaptation connection assembly provided according to a specific embodiment of the present application, since the hanging plate 2 is integrally formed with the case 3, it is not necessary to separately process and mount the hanging plate 2. Moreover, since the component-hanging hole 2-1 is arranged to be exposed relative to the buckle 1, when the buckle 1 is mounted on the hanging plate 2, it is not necessary to remove the buckle 1 in a case that the component-hanging hole 2-1 is needed for mounting in following steps. Therefore, the operation is simple, and the use convenience of the device adaptation connection assembly is effectively improved.

In a specific embodiment, the buckle 1 includes a body and a sliding rail 1-3 arranged at a side portion of the body. The hanging plate 2 is provided with a component-hanging hole 2-1, and a sliding groove 2-2, which matches with the sliding rail 1-3. One of the body and the hanging plate 2 is provided with a clamping opening 2-4, and the other of the body and the hanging plate 2 is provided with an elastic limiting member 1-5, which can be clamped into the clamping opening 2-4 to fasten the buckle 1 with the hanging plate 2. Preferably, the hanging plate 2 is provided with a mounting groove 2-3 fitted with a bottom wall of the buckle 1.

Specifically, the component-hanging hole 2-1 may be a Z-shaped structure with its top end being open. The component-hanging hole 2-1 may be hung and mounted on a corresponding mounting plate 6 by a fastener, which specifically may be a threaded fastener. For example, by passing a bolt 4 through the mounting plate 6 and the component-hanging hole 2-1, the mounting plate 6 and the component-hanging hole 2-1 can be fastened by a nut 5, where a front side of the hanging plate 2 is locked by the nut 5. Specifically, the mounting plate 6 may be a part of a body of the product.

When the buckle 1 is assembled with the hanging plate 2, the buckle 1 is mounted by moving the sliding rail 1-3 along the sliding groove 2-2, and the elastic limiting member 1-5 is deformed during the mounting process. The elastic limiting member 1-5 pops up when it reaches the clamping opening 2-4, forming a reverse limit. Preferably, the sliding rail 1-3 abuts against and limits an end portion of the sliding groove 2-2, and thus the mounting of the buckle 1 is completed. In order to facilitate cooperation between an external device and the buckle 1, it is preferable that, after the mounting is completed, a component-clamping surface on the body used for locking the external device protrudes outward from a surface of the hanging plate 2. Specifically, the device is provided with the mounting plate 6 connected with the device adaptation connection assembly.

In a case that there is no need to use a screw for mounting during an on-site installation, the buckle 1 can directly clamped the mounting plate 6 by the component-clamping surface, where the mounting plate 6 may be embodied as an assembly frame. After the mounting is completed, the buckle 1 is preferably coupled with the mounting plate 6, which can effectively prevent separation and falling.

The component-clamping surface on the body used for locking the device protrudes outward from the surface of the hanging plate 2. That is, the component-clamping surface is in surface contact with the assembly frame, which effectively prevents the hanging plate 2 from being worn and scratched by the frame.

From the above description, it can be seen that, in the device adaptation connection assembly provided according to the specific embodiment of the present application, the buckle 1 is assembled with the hanging plate 2 by the sliding rail 1-3 and the sliding groove 2-2, and then locked in the clamping opening 2-4 by the elastic limiting member 1-5, so that the buckle 1 and the hanging plate 2 can be chosen for coupling with the external devices as required.

In addition, in the present application, the manner for mounting the hanging plate 2 with the buckle 1 can be quickly switched, which avoids cumbersome operations and saving man-hours for mounting.

The sliding rail 1-3 is arranged at a side portion of the body, and the body includes a connecting portion 1-4 and an elastic locking portion 1-1. The bottom portion of the elastic locking portion 1-1 is connected to a bottom portion of the connecting portion 1-4 and the top portion of the elastic locking portion 1-1 is separated from the connecting portion 1-4 to form a U-shaped clamping portion with the component-clamping surface. The elastic limiting member 1-5 is located in the connecting portion 1-4. Specifically, the sliding groove may be opened on sides of the body. In another embodiment, the sliding rail 1-3 is located on the connecting portion 1-4. Specifically, an opening of the U-shaped clamping portion is arranged upwardly. The elastic limiting member 1-5 may be made of a sheet metal part.

The elastic limiting member 1-5 may be mounted on the body by bonding, welding and the like.

In order to improve the assembly efficiency, it is preferable that the elastic limiting member 1-5 is formed by cutting and bending the connecting portion 1-4, and a free end of the elastic limiting member 1-5 is arranged toward the direction of the opening of the U-shaped clamping portion. That is, the elastic limiting member 1-5 is integrally formed with the connecting portion 1-4.

Preferably, the connecting portion 1-4 is in a flat plate structure, and the elastic locking portion 1-1 is provided with an anti-dropping barb 1-6 whose free end is extending into the U-shaped clamping portion and used for clamping the device. Preferably, the free end of the anti-dropping barb 1-6 is arranged at an acute angle. Specifically, the number of the anti-dropping barb 1-6 may be one or at least two, and the connection stability of the buckle 1 can be improved by providing the anti-dropping barb 1-6.

In a specific embodiment, the free end of the elastic locking portion 1-1 is provided with a flange 1-2 facing the outside of the U-shaped groove. In use, the user operates the flange 1-2 to press the elastic locking portion 1-1, so that an opening of the U-shaped clamping groove is enlarged, which facilitates the external components, such as the mounting plate 6, of being clamped.

In order to improve the sliding stability of the buckle 1, it is preferable that the end portion of the sliding rail 1-3 abuts against the end portion of the sliding groove 2-2 when the elastic limit member 1-5 is clamped into the clamping opening 2-4.

Specifically, the number of the sliding rail 1-3 may be two, which are located at two opposite side portions of the connecting portion 1-4, respectively.

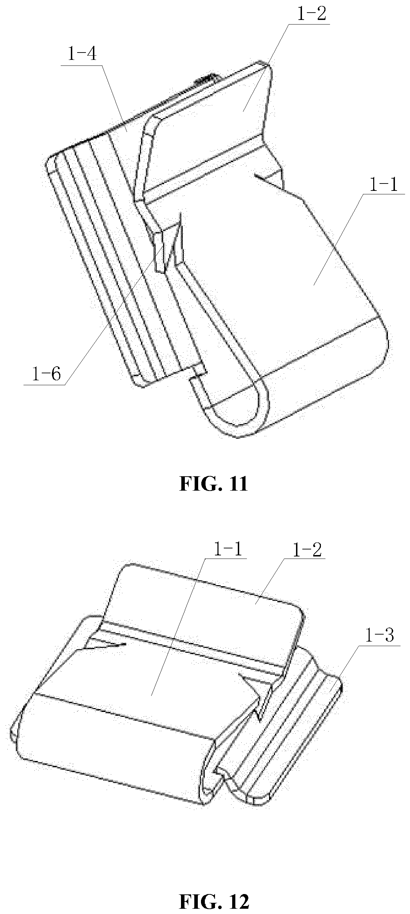

Preferably, the sliding rail 1-3 is arranged on the body, and a U-shaped groove structure is formed by the sliding rail 1-3 and the body). As shown in FIG. 12, specifically, the free end of the sliding rail 1-3 and the elastic limiting member 1-5 are located outside from the same side of the body. The sliding rail 1-3 is fitted with the sliding groove 2-2 for limiting the buckle 1.

A minitype power supply module provided according to the present application includes any one of the above device adaptation connection assembly. The specific structure of the device adaptation connection assembly has been described above. Since the minitype power supply module includes the above-mentioned device adaptation connection assembly, the minitype power supply module also has the above technical effects.

Specifically, the body of the same power supply module may be provided with one or at least two buckles 1.

The above embodiments are described in a progressive manner. Each of the embodiments is mainly focused on describing its differences from other embodiments, and reference may be made among these embodiments with respect to the same or similar parts.

According to the above description of the disclosed embodiments, those skilled in the art can implement or practice the present application. Various modifications to the embodiments are apparent to the person skilled in the art, and the general principle herein can be implemented in other embodiments without departing from the spirit or scope of the present application. Therefore, the present application will not be limited to the embodiments described herein, but should be in accordance with the broadest scope consistent with the principle and novel features disclosed herein.

## Claims

1. A device adaptation connection assembly, comprising:
a hanging plate (2) integrally formed with a case (3), wherein the hanging plate is provided with a component-hanging hole (2-1); and
a buckle (1) detachably connected to the hanging plate (2), wherein the component-hanging hole (2-1) is arranged to be exposed relative to the buckle (1).

2. The device adaptation connection assembly according to claim 1, wherein
the buckle (1) comprises a body,
one of a sliding rail (1-3) and a sliding groove (2-2) matched to each other is arranged at a side portion of the body, and the other of the sliding rail (1-3) and the sliding groove (2-2) is provided on the hanging plate (2),
one of the body and the hanging plate (2) is provided with a clamping opening (2-4), and the other of the body and the hanging plate (2) is provided with an elastic limiting member (1-5), which is clamped into the clamping opening (2-4) to fasten the buckle (1) with the hanging plate (2).

3. The device adaptation connection assembly according to claim 2, wherein the body comprises a connecting portion (1-4) and an elastic locking portion (1-1), a bottom portion of the elastic locking portion (1-1) is connected to a bottom portion of the connecting portion (1-4) and a top portion of the elastic locking portion (1-1) is separated from the connecting portion (1-4) so as to form a U-shaped clamping portion, wherein both the sliding rail (1-3) and the elastic limiting member (1-5) are provided on the connecting portion (1-4).

4. The device adaptation connection assembly according to claim 3, wherein the elastic limiting member (1-5) is formed by cutting and bending the connecting portion (1-4), and a free end of the elastic limiting member (1-5) is arranged toward an opening of the U-shaped clamping portion.

5. The device adaptation connection assembly according to claim 4, wherein the connecting portion (1-4) is in a flat plate structure, and the elastic locking portion (1-1) is provided with an anti-falling barb (1-6), which has a free end extending into the U-shaped clamping portion, wherein the anti-falling barb (1-6) is configured to clamp an external device.

6. The device adaptation connection assembly according to claim 3, wherein a free end of the elastic locking portion (1-1) is provided with a flange (1-2), which is arranged toward an outside of the U-shaped clamping portion.

7. The device adaptation connection assembly according to claim 2, wherein an end portion of the sliding rail (1-3) abuts against an end portion of the sliding groove (2-2) in case that the elastic limiting member (1-5) is clamped into the clamping opening (2-4).

8. The device adaptation connection assembly according to claim 2, wherein the number of the sliding rail (1-3) is two, the two sliding rails (1-3) are arranged on the body, and a U-shaped groove structure is formed by the sliding rails (1-3) and the body.

9. The device adaptation connection assembly according to claim 8, wherein a free end of the sliding rail (1-3) and the elastic limiting member (1-5) are located at a same side of the body.

10. The device adaptation connection assembly according to any one of claims 2 to 9, wherein a component-clamping surface on the body, which is configured for clamping the external device, protrudes outward from a surface of the hanging plate (2).

11. A minitype power supply module, comprising the device adaptation connection assembly according to any one of claims 1 to 10.
